# EUROPEAN PATENT APPLICATION

(11) **EP 0 751 329 A1**
(43) Date of publication of application: **02.01.1997**
(21) Application number: 96304705.5
(22) Date of filing: 26.06.1996
(51) Int. Cl.: F16L 37/084, F16L 33/22

(54) **Tube coupling body**

(30) Priority: 26.06.1995 GB 9512973
(71) Applicant: Guest, John Derek, Maidenhead, Berkshire SL6 2RX (GB)
(72) Inventor: Guest, John Derek, Maidenhead, Berkshire SL6 2RX (GB)
(74) Representative: Bayliss, Geoffrey Cyril

(57) **Abstract**

The disclosure relates to a tube coupling body (10) having an open ended throughway (11) encircled by an annular socket (13) to receive a tube end. The annular socket has a grab ring (20) mounted on its outer wall having teeth (21,22) around both its inner and outer peripheries. The outer teeth (22) of the grab ring are angled towards the open end of the socket and engage the inner surface of the outer wall of the socket to prevent the grab ring from being extracted from the socket and the inner teeth (21) of the grab ring are angled towards the bottom of the socket to engage an outer surface of the tube located in the socket to resist extraction of the tube from the socket. The outer surface of the inner wall (14) of the socket has an encircling ridge (23) disposed opposite the teeth on the inner periphery of the grab ring to support the tube in engagement with the teeth at that location and to seal on the inside of the tube.

## Description

This invention relates to tube coupling bodies and in particular to tube coupling bodies in which an end portion of a tube is secured in the body by means of a grab ring.

My European Patent Application No 94306729.8 discloses a number of forms of grab ring and arrangements in which the grab rings are utilised for securing a tube end in a coupling body. The present invention discloses a further arrangement which is particularly suitable for use with nylon tube, barrier tubing and multi-layer PVDF tubing.

The invention provides a tube coupling body having an open ended throughway encircled by an annular socket to receive a tube end, the annular socket having a grab ring mounted on its outer wall having teeth around both its inner and outer periphery, the outer teeth of the grab ring being angled towards the open end of the socket and engaging the inner surface of the outer wall of the socket to prevent the grab ring from being extracted from the socket and the inner teeth of the grab ring being angled towards the bottom of the socket to engage an outer surface of the tube located in the socket to resist extraction of the tube from the socket, the outer surface of the inner wall of the socket having an encircling ridge disposed opposite the teeth on the inner periphery of the grab ring to support the tube in engagement with the teeth at that location.

In one arrangement according to the invention the inner surface of the outer wall of the socket is formed with an annular step partway into the socket facing towards the open end of the socket and the grab ring is lodged against the step.

The inner surface of the outer wall of the socket may be formed with a further annular step spaced into the socket from the first annular step to define with the outer surface of the inner wall of the socket an annular seat in which an end portion of tube is engageable.

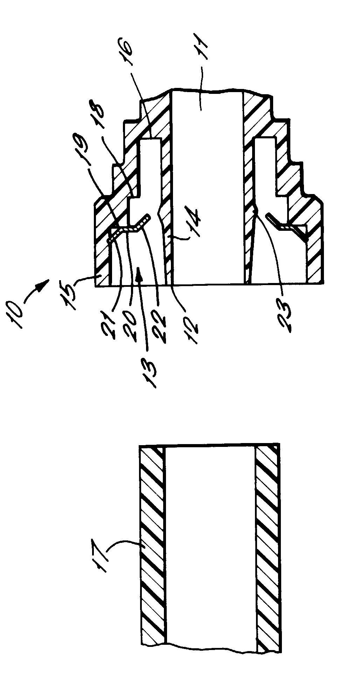

The following is a description of a specific embodiment of the invention, reference being made to the accompanying drawing which shows a tube coupling body and a portion of a tube for securing therein.

The drawing shows a tube coupling body illustrated generally at 10 formed in moulded plastics and having a throughway 11 with an open end 12. The part of the coupling body adjacent the open end of the throughway is formed with an open ended annular socket 13 having an inner wall 14 and an outer wall 15. Adjacent the bottom 16 of the socket, the spacing between the inner and outer wall corresponds to the thickness of the tube 17 to be secured in the socket. Part way up the socket, there is a first step 18 in the inner surface of the outer wall of the socket facing towards the open end of the socket to enlarge the width of the socket followed by a second deeper step 19.

An annular grab ring 20 is mounted on the outer wall of the socket against the shoulder 19. The grab ring has inner and outer closely spaced angled teeth 21 and 22 respectively. The outer teeth are angled towards the open end of the socket and bear against the inner surface of the socket to resist extraction of the grab ring from the socket and the inner teeth are angled towards the bottom end of the socket to bear against the outer surface of the tube 17 to resist extraction of the tube. When the tube is forced into the socket to the bottom 16 of the socket, the teeth 22 are deflected to allow the tube to pass and then bear against the outer surface of the tube.

The outer surface of the inner wall 14 of the socket is formed with a shallow ridge 23 spaced opposite the inner row of teeth 22 of the grab ring to support the inner surface of the tube 17 opposite the location where the teeth 22 of the grab ring bear on the outer surface of the tube.

The arrangement is particularly suitable for use with a soft wall tubing such as nylon tube, a barrier tubing or a multi-layer PVDF tube.

## Claims

1. A tube coupling body having an open ended throughway encircled by an annular socket to receive a tube end, the annular socket having a grab ring mounted on its outer wall having teeth around both its inner and outer periphery, the outer teeth of the grab ring being angled towards the open end of the socket and engaging the inner surface of the outer wall of the socket to prevent the grab ring from being extracted from the socket and the inner teeth of the grab ring being angled towards the bottom of the socket to engage an outer surface of the tube located in the socket to resist extraction of the tube from the socket, the outer surface of the inner wall of the socket having an encircling ridge disposed opposite the teeth on the inner periphery of the grab ring to support the tube in engagement with the teeth at that location and to seal on the inside of the tube.

2. A tube coupling body as claimed in claim 1, wherein the inner surface of the outer wall of the socket is formed with an annular step partway into the socket facing towards the open end of the socket and the grab ring is lodged against the step.

3. A tube coupling body as claimed in claim 1 or claim 2, wherein the inner surface of the outer wall of the socket is formed with a further annular step spaced into the socket from the first annular step to define with the outer surface of the inner wall of the socket an annular seat in which an end portion of tube is engageable.
